# EUROPEAN PATENT SPECIFICATION

(11) **EP 0 945 818 B1**
(45) Date of publication and mention of the grant of the patent: **17.09.2008**
(21) Application number: 99105971.8
(22) Date of filing: 24.03.1999
(51) Int. Cl.: G06K 7/10

(54) **Bar code reader for portable computers**
Streifencodeleser für tragbare Computer
Lecteur de codes à barres pour ordinateurs portables

(30) Priority: 24.03.1998 US 47015
(43) Date of publication of application: 29.09.1999
(73) Proprietor: Symbol Technologies, Inc., Holtsville, New York 11742-1300 (US)
(72) Inventor: Barkan, Edward, Miller Place, NY 11764 (US); Lert, John, Westport, CT 06880 (US); Bard, Simon, Setauket, NY 11733 (US)
(74) Representative: Wagner, Karl H.

(56) References cited:
- EP-A- 0 464 284
- WO-A-96/02879
- WO-A-96/13015
- DE-A- 4 411 716
- US-A- 4 534 012
- US-A- 5 047 615
- US-A- 5 288 985
- US-A- 5 703 349

## Description

### Field of the Invention

The invention relates to a bar code reader for example for addition to a variety of commercially available or handheld computers to incorporate scanning capability into the existing terminal. The existing terminal may be, for example, a personal digital assistant.

### Description of the Related Art

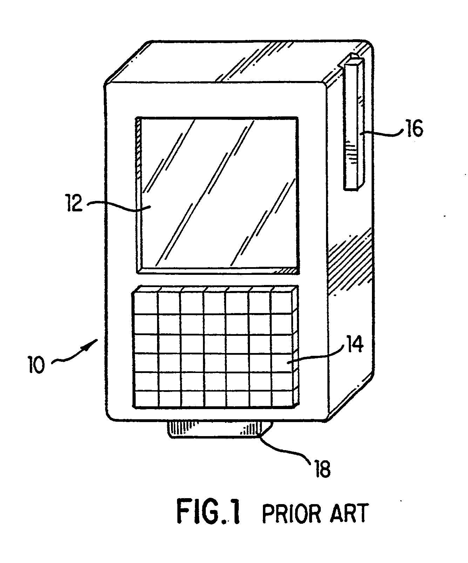

Computers of the type known as personal digital assistants are well known in the art and compute self contained computer capability. For similicity such computers will be referred to as terminals herein. A typical example of such a terminal is shown in Fig. 1. The terminal designated generally 10 includes a display 12 such as an LCD screen and user input means 14 such as a keyboard. The terminal 10 includes memory means and processing means of any suitable type (not shown) for storing and/or processing data input by the user. In some implementations the terminal can incorporate further user input means comprising a stylus 16 for writing on the display 12 and means for reading and decoding data written directly on the screen 12. The terminal 10 can further incorporate an interface 18 typically extending from the bottom of the terminal 10. The interface 18 can be a serial interface of any suitable type. The terminal 10 can be part of a portable data collection system based on pen or touch input and the ability to run custom applications either stored in hard memory in the terminal or in software communicated via the interface 18. The interface 18 can similarly be used for up loading and down loading relevant information on a portable data collection system.

However, known portable digital assistants are of limited capacity and efficiency as data collection systems.

WO 96/02879 A discloses a personal digital assistant module with a local CPU, memory, and I/O interface having a host interface comprising a bus connected to the local CPU and a connector at a surface of the personal digital assistant for interfacing to a bus connector of a host general-purpose computer, providing direct bus communication between the personal digital assistant and the host general-purpose computer. The personal digital assistant may have an expansion port connected to the local CPU, and expansion peripheral devices may be connected and operated through the expansion port. The peripheral devices may include a scanner attachment or a bar code reader.

DE 44 11 716 A1 discloses a portable universal computer for connection with a mobile telephone via a modem. The computer comprises a removable I/O unit for display and input of data for the computer as well as for establishing a communication connection. A bar code reader is integrated into the computer.

EP 0 464 284 A2 discloses a miniature scan module which is adapted to be installed as part of a terminal or other apparatus for the reading of bar codes and which has an integrated assembly of a laser diode and a photodetector which assembly is rotatably mounted for reciprocation about an axis of rotation. The assembly is supported in whole or in part on and connected electrically to, a mounting board by flexures which extend between the integrated assembly and the supports on the board. The assembly has a body with a wall and a platform. The wall supports the laser and has a reflective surface which directs light resulting from the scanning of the laser beam across the bar code to the detector. The assembly also carries printed circuits connected to the detector and the laser diode. Connections are made through the flexures to these printed circuits and to other circuits on the mounting board. Claim 1 is delimited against this prior art.

US-A-5,047,615 discloses a portable terminal and controller unit placed in a recessed portion of the hand held portion of a bar code printer and provided with a bar code reader connected to the bottom side thereof by means of a flexible connector. The portable terminal and controller unit controls the bar code printer and the bar code reader, and, for example, comprises a portable computer.

### Object of the Invention

An object of the invention is to overcome or mitigate problems or disadvantages with known terminals.

A particular object of the invention is to provide a versatile and efficient data collection system.

### Features of the invention

According to the invention there is provided a data collection module for a portable or handheld computer as set forth in claim 1. As a result the computer capability can be enhanced whilst making use of the existing computer facilities.

Another feature of the present invention is to provide an automated test of battery performance, which is very important for portable devices such as those discussed.

Battery performance is defined by the amount of the energy it can deliver to the user. Battery performance is the function of a variety of the parameters, such as environment conditions, applications, number of charge/discharge cycles etc. All these conditions influence the final parameter which determines the performance of a battery - internal impedance.

If the user has a number of (or even a few) batteries, one of the most important questions a user asks himself is whether or not battery will last long enough to support the application. The invention provides a user with this information in terms of expected capacity compared with a brand new battery. The present invention is based on the finding that there is a strong correlation between internal impedance of the battery, time it takes to charge it to the certain voltage and discharge capacity, more specifically the higher the impedance, the higher is the rate of charge of voltage dV/dt, the lower is discharge capacity.

The method according to the present invention is to measure the value of dV/dt, and based on the stored statistical data associated with that type of battery, provide an indication of expected discharge capacity. In order to provide accurate estimation, a battery will be automatically discharged to the fixed pre-determined level upon insertion into the test fixture. The tester has a number of levels of the capacity, referencing to the battery specification value, i.e.: 80% - 100%; 60% - 80% and so forth. Indication can be done via LED, LCD display or any other means.

The preferred test takes a voltage measurement after one minute of the charge at 1C (1 coulomb) rate, compares it with pre-determined voltage levels and indicate anticipated capacity range through LED indicators - one illuminated LED per capacity range. If the battery's estimate capacity falls on the border between two levels, both LEDs may be active, otherwise only one is lit.

Additional battery capacity can be held in the module and the battery testing facility can be incorporated in the module. The module can further include, for example, a battery gas gauge.

The novel features which are considered as characteristic of the invention are set forth in particular in the appended claims. The invention itself, however, both to its construction and its method of operation, together with the objects and advantages thereof, will be best understood from the following description of specific embodiments when read in connection with the accompanying drawings. The features of the invention are set out in the appended independent claims, and further preferred features are set out in the dependent claims.

### Brief Description of the Drawings

Fig. 1 illustrates schematically a personal digital assistant of known type;
Fig. 2 illustrates a terminal inserted in a cradle not according to the present invention;
Fig.3 is a side view corresponding to the arrangement of Fig. 2;
Fig. 4 is a plan view corresponding to the arrangement in Figs. 2 and 3;
Fig. 5 is a block diagram for a cradle not according to the present invention;
Fig. 6 shows a terminal with a wand scanner attachment;
Fig. 7 is a plan view of the arrangement shown in Fig. 6;
Fig. 8 is a plan view of a terminal including a scanner attachment;
Fig. 9 is a perspective view corresponding to the arrangement of Fig. 8;
Fig. 10 is a plan view of a terminal including an alternative scanner attachment not forming part of the claimed invention.
Fig. 11 is a perspective view of an alternative arrangement not forming part of the invention.
Fig. 12 is a perspective view of a further arrangement not forming part of the invention and;
Fig. 13 shows a compatibility protocol for terminal and module.

### Detailed Description of the Preferred Embodiments

One particularly advantageous system for data collection incorporates optical readers for reading information in the form of graphic indicia such as barcode symbols. These readers are in general well known and incorporate a reading beam generating source such as a laser diode, a detector for detecting the reading beam reflected from an indicia to be read and a decoder for decoding the information received by the detector to establish information represented by the indicia. Such a system is disclosed in US 4251798, 4369361, 4387297, 4409470, 4760428, 4896026, 5015833, 5262627 and 5504316. It will be appreciated, however, the incorporation of this technology directly into an existing portable data terminal would necessitate extensive reconfiguration in relation to hardware and software and would be unlikely to be cost effective.

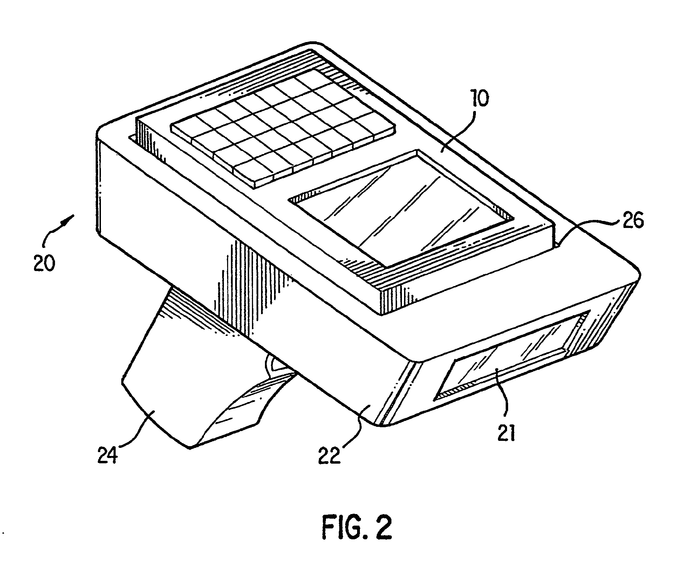

Referring to Fig. 2 an arrangement not in accordance with the present invention is shown. In particular a cradle 20 is provided into which the terminal 10 is received. The cradle 20 comprises a cradle body 22 and an optional grip or handle 24. The cradle body 22 includes a recess 26 in its upper face configured to receive the terminal 10. A suitable serial interface is provided at the rear of the recess 26 for connection to the serial interface 18 on the terminal 10. Means for retaining the terminal in place such as a clip, detent or biased member holding the terminal 10 in place are provided. Preferably the retaining means are arranged to cooperate with existing features of the terminal or rely on some form of biasing force against a surface of the terminal 10 to hold it is place.

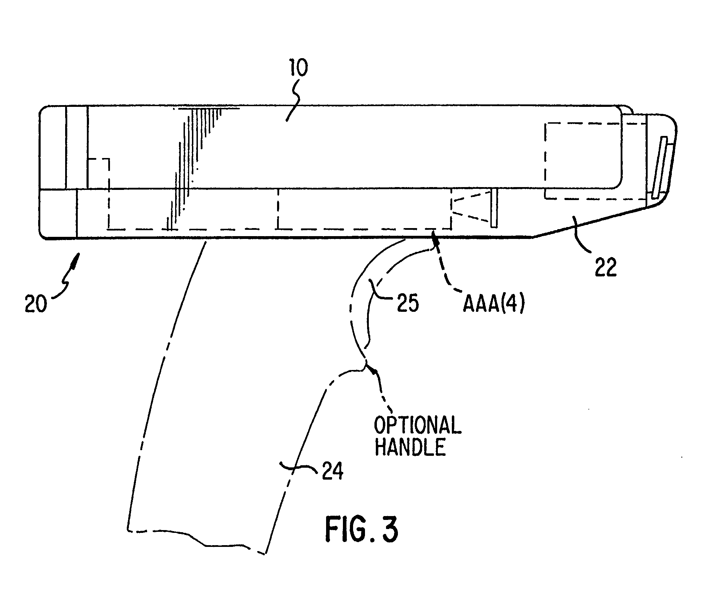

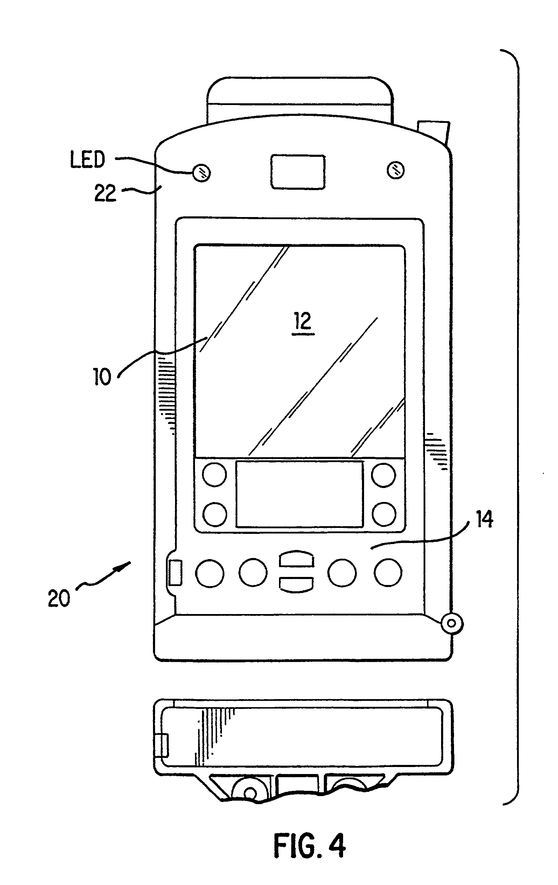

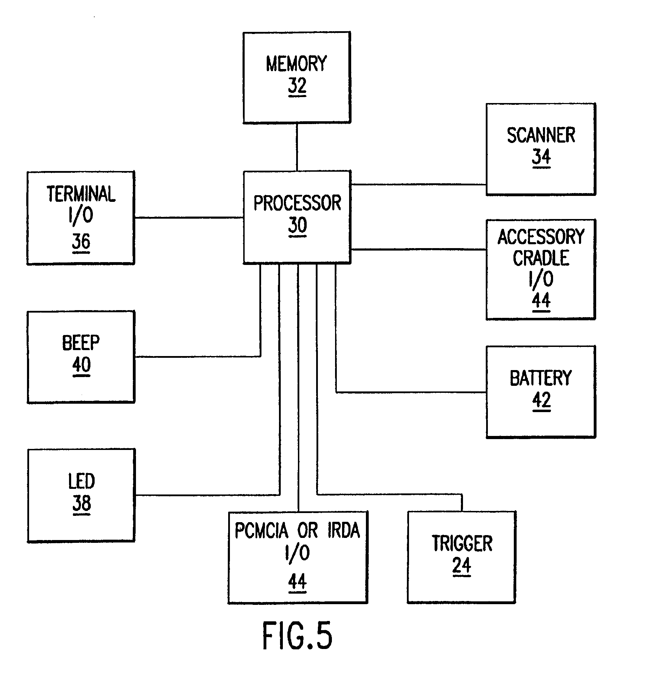

Referring also to Figs. 3 to 5, the cradle 20 comprises upgrade hardware and software allowing a significant increase in the range in versatility of the terminal 10 whilst making use of all of the features inherent in the terminal 10 to avoid duplication. The cradle 20 includes a processor 30 for processing information to and from the cradle, and controlling various components. The cradle 20 can incorporate any of a range of capabilities as represented particular in Fig. 5. The processor 30 cooperates with a memory 32 in its control and processing capability. The memory 32 incorporates components allowing read only basic control information and programs to be stored together with user input and/or software applications. The memory can be wholly or partially hard memory and can also incorporate a peripheral memory device such as a disk drive as appropriate.

In one arrangement the cradle 20 incorporates a scan engine. In particular a scan window 21 is provided, for example, forward facing or slightly downwardly inclined. The scan engine is represented as 34 in the block diagram of Fig. 5 and the necessary beam generating, detecting and scanning components together with the decoder and scanner driver are incorporated in the processor 30 and/or scanner 34. In practice, for example, the cradle 20 can incorporate a suitable scan engine of known type. In practice the terminal 10 may have decoding capability in which case the raw information can be transferred directly to the terminal 10 via the terminal input/output interface 36.

The cradle 20 can further incorporate a visual indicator such as a light emitting diode 38 for indicating operational mode, battery low or other suitable information. Similarly an audible indicator such as a "beep" 40 can be provided for issuing a suitable signal. If the terminal 10 incorporates these components then, alternatively, they can be activated directly on the terminal via the terminal interface 36.

The cradle may incorporate its own power source such as a battery 42, or rechargeable power pack as appropriate. The power source can be used to supplement the terminal's internal batteries to power the scanner or other accessories associated specifically with the cradle 20.

The cradle 20 can additionally or alternatively incorporate wireless communication capability to the terminal 10, for example a PCMCIA slot 44 for insertion of a radio card for wireless LAN communication, a modem, global positioning (GPS) capability, infra-red communication (IRDA) or any other appropriate means. The cradle can incorporate means (not shown) for illuminating the screen 12 of the terminal 10 to improve legibility, especially in dark environments.

One possible use for the terminal is as a batch terminal in which data is input and stored in discrete batches which are then down loaded to a main processor via the serial interface 18. Typically a dedicated accessory cradle for the terminal is provided for these purposes. Where it is desired to make use of the enhanced capabilities available from the terminal 10 when received in the data collection cradle 20, however, the cradle 20 can incorporate an accessory cradle interface 44. This can either be via some form of ribbon or other wired means, or the data collection cradle 20 can include a formation or be of a shape to be received in the accessory cradle directly, reducing the number of components and facilitating batch use.

As yet a further alternative, rather than a physical interface an optical interface such as one using infra-red communications (IRDA) can be used for communication. One way of incorporating this is disclosed in US 5189291. A simple means of down loading information from the terminal is thus achieved without complex and cumbersome physical connections being required.

Typically terminals 10 comprise a substantially cuboid housing having parallel oblong upper and lower faces. The screen and keyboard are preferably provided on the upper face allowing the terminal to be held comfortably in one hand whilst data is input and the screen is read. Conventionally the screen is provided at the forward end of the upper face and the keyboard at the rear end (so that the user cannot obscure the screen when entering data) such that the serial interface projects rearwardly from bottom of the terminal. The cradle body 22 is similarly cuboid in shape including a recess of dimensions slightly greater than the oblong upper and lower faces of the terminal. The recess may be of less depth than the terminal, or equivalent or greater depth as appropriate.

The serial interface on the cradle is provided at the rear of the recess to cooperate with the serial interface on the terminal and terminal retaining means can be provided at any appropriate position around the recess. In this configuration the scanning window 21 on the terminal body is preferably provided at the front face, pointing forwardly to allow ergonomic reading by a user holding the terminal in cradle. The reading window and/or the front face of the cradle may be slightly downwardly inclined allowing the terminal to be held essentially horizontal even though an indicia below the level of the terminal is being read.

Optionally a grip or handle 24 is provided projecting downwardly from the lower face of the cradle 20 and configured such that when gripped by the user the scanning window 21 points forwardly (and possibly downwardly as well). The handle can be, for example, of the "gun" handle type allowing aim and shoot scanning ergonomics. To enable easy operation of the scanning capability, a trigger 25 may be provided on the handle 24. The trigger can be a two or more position trigger, each position corresponding to a different mode of operation such as HV or long range scanning. Because the cradle 20 essentially surrounds the terminal 10 when internal 10 is inserted, the cradle can provide shock or drop protection and the housing of the cradle can be suitably reinforced to enhance this feature as desired.

The cradle 20 can incorporate one or more various software applications either in hard or soft memory, or by a peripheral memory device such as a disc drive. Following these software features, the terminal can recognise when it is installed in the data collection cradle 20 and automatically run as a data collection program. The terminal can automatically revert to its personal digital assistant functions when it is removed from the cradle 20. The terminal 10 can communicate with the cradle 20 to display data received from the scanner 34. The operation of the cradle, including the scanner function can be controlled via the terminal keyboard 14, or touch screen 12. The terminal 10 can display status information received from the cradle 20 such as the condition of the batteries in the cradle. The terminal 10 can send messages to the cradle 20 causing it to beep, change beeper frequency, flash its LEDs, prevent scanning and so forth.

Accordingly the cradle enhances the capabilities of the terminal converting it into a versatile data collection tool whist making use of the inherent capabilities of the terminal. For example operational information can be displayed on the terminal screen in relation to control and operation of the scanner, operational parameters can be input via the terminal to control operation of the scanner and so forth. At the same time the cradle makes use of the inherent data processing capability of the terminal, improving it by introducing bar code-type scanning capabilities but effectively remaining "invisible" such that the terminal can be used in conjunction with existing peripherals for, for example, batch terminal use and so forth.

The cradle 20 can incorporate further additional features, for example, a radio card allowing wireless communication, or additional memory capability for the terminal, the cradle or, for example the radio system, which can be based on a plug-in radio card.

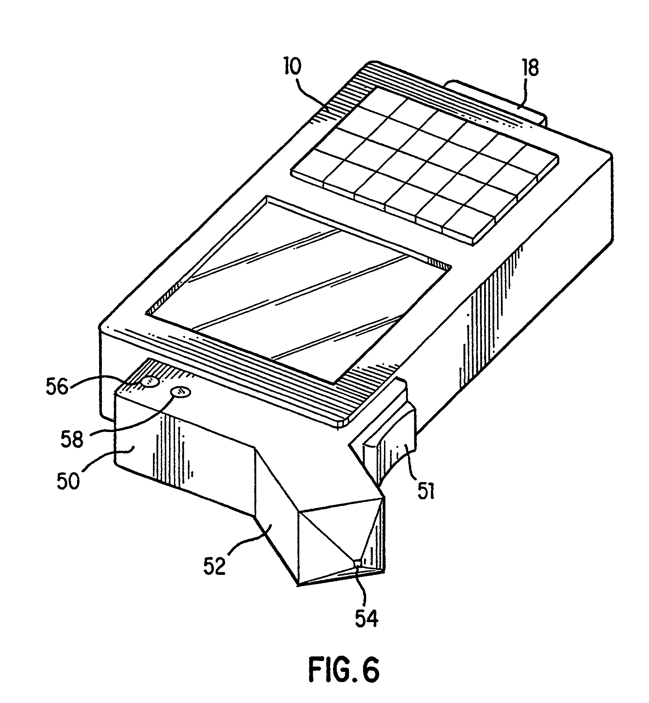

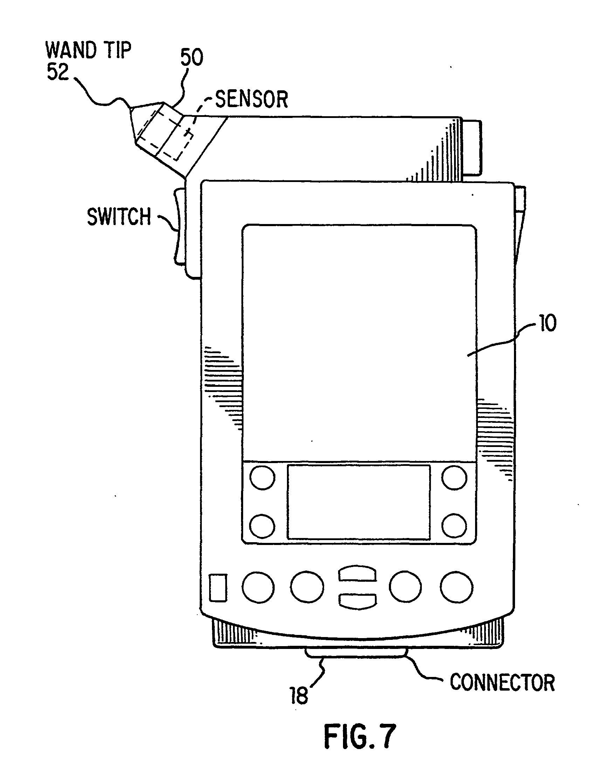

Further possible ways of achieving the same results are discussed in more detail below, in particular a wand or handheld laser scanner with battery box, both making use of the existing serial interface connector on the terminal. One such arrangement is shown in Figs. 6 and 7. In particular a wand-type scanner adapter 50 is shown attached to a terminal 10, in accordance with the present invention.

Applications can be envisaged in which the user does not require the full range of capabilities provided by the cradle discussed in relation to Figs. 2 to 5 and/or cannot justify the cost and complexity of such a component. At the same time the user may wish to incorporate a lower performance scanner such as a wand scanner. Wand scanners are known in the art and effectively comprise a reading beam generator and a reading beam detector. The reading beam exits and re-enters through a reading window which is manually swiped or scanned across a barcode symbol or other indicia to be read. As a result the scanning mirror and the corresponding support and drive components are not required, reducing the cost, size and complexity of the arrangement.

The scanner includes a wand 52 having a wand tip or reading window 54. The scanner is preferably mounted on the front end of the terminal 10 and in the embodiment shown the wand 52 extends forwardly and obliquely at one edge of the front of the terminal. As a result the user can retain the terminal in the usual palm top configuration and scan the scanner 50 without changing his grip. In a further embodiment (not shown) the wand 52 can be arranged to pivot slide swing or otherwise move to one of the two opposing front corners allowing left or right handed use.

The scanner 50 is preferably releasably attached to the terminal by any suitable means such that it can be removed when the user does not require it. The scanner 50 communicates with the terminal 10 via, for example, a ribbon cable interface extending down the back of the terminal so as not to interfere with operation of the terminal 10. The scanner 50 is installed on the terminal 10 by first inserting an interface plug on the ribbon cable into the terminal interface 18 and then snapping the scanner 50 into place. The ribbon cable can be carried within a thin member or can be unsupported but in either case the arrangement is flexible enough to permit insertion of the interface plug into the interface 18, but to hold the scanner 50 in place on the terminal once it has been positioned. In a further desired embodiment scanner 50 is incorporated in some form of shell encapsulating or partly encapsulating the terminal 10, allowing drop/shock protection and also improved interface security.

The scanner 50 can carry additional decoding capability or can rely on existing capability within the terminal 10. Similarly the scanner 50 can carry its own power supply such as batteries or can take power from the terminal 10. The scanner 50 can carry additional features such as an audible indicator such as a beeper 56 and/or a visual indicator such as an LED 58 which can be activated to indicate a successful decode. The beeper 56 can be of sufficient power to be heard even in noisy environments which is not necessarily the case with beepers, to be found on known terminals.

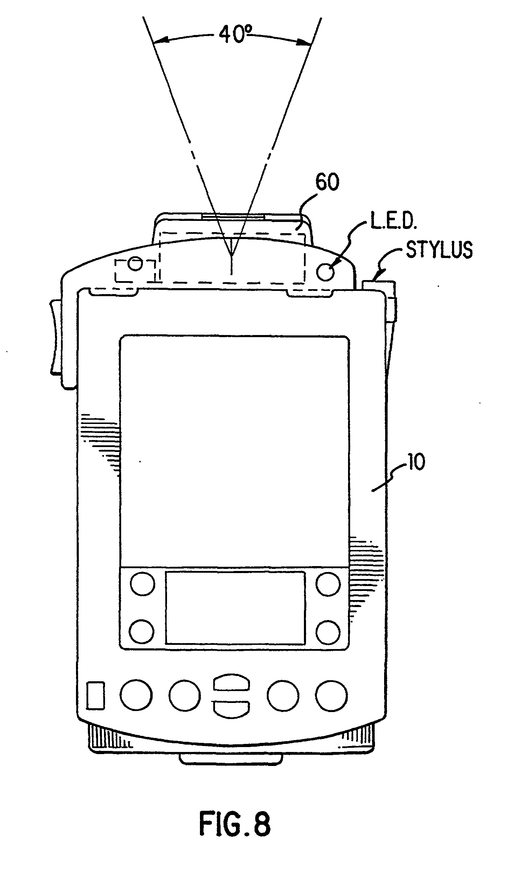

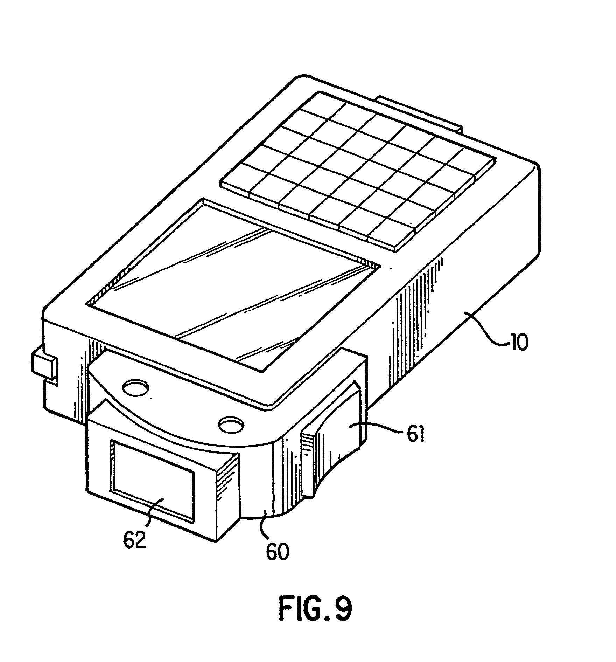

A further alternative arrangement not forming part of the claimed invention is shown in Figs. 8 and 9. According to this further arrangement, the full scanner capability of the cradle is combined with the general lower performance requirements of the wand adapter. In particular, a scanner 60 is provided mountable to the front corner of a terminal 10. The scanner 60 includes a scanning window 62 essentially centrally mounted relative to the terminal 10. The scanner 60 further includes reading beam generating and detecting means and a scanning mirror or other means for sweeping the beam automatically together with associated circuitry. As a result the high performance of a full scanner is obtained without introducing the full range of capabilities potentially allowed by the cradle. Accordingly, yet another user option is provided dependent on the specific user requirements.

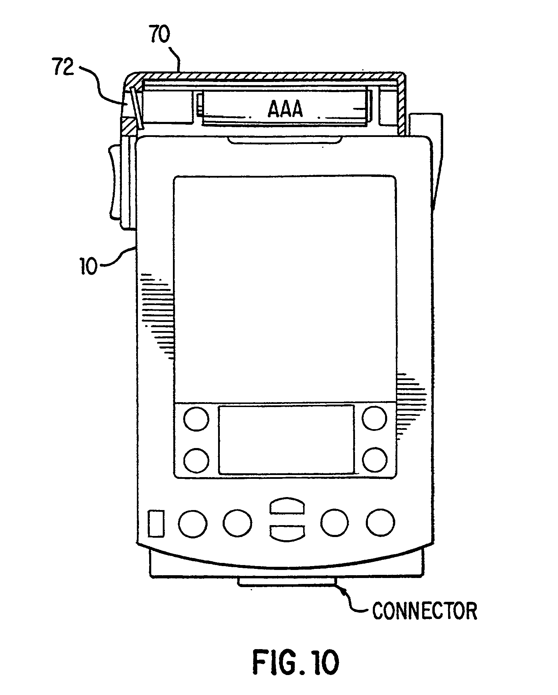

Fig. 10 shows yet a further variant in which a scanner adapter 70 is provided at the front end of a terminal 10 and includes a scanner window 72 defining a scanning direction in the horizontal plane, perpendicular to the forward axis of the terminal 10.

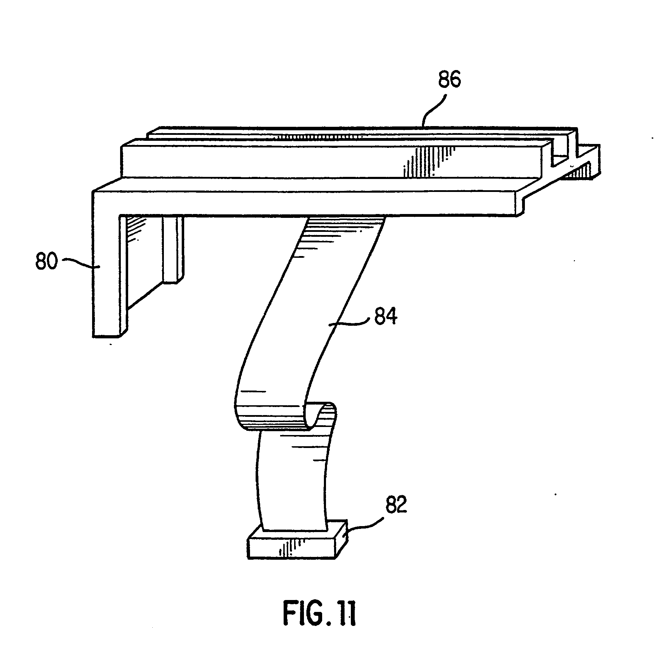

The above discussion has been directed in particular to data collection in the form of a scanner for reading barcode symbols and similar graphic indicia. It will of course be appreciated that alternative data collection capabilities can be introduced in the adapter. For example a signature capture and/or verification capability may be introduced into the adapter. Alternatively, or in addition, a card reader such as a magnetic strip reading can be incorporated. Of course any one or combination of these different capabilities can be incorporated into the adapter. Fig. 11 shows an adapter 80 for a terminal 10 (not shown) including an interface 82, interface ribbon 84 and, on the upper face, a magnetic strip reader 86.

The modified adapter can be used to render the terminal suitable, for example, package delivery. On delivery of the package it can be signed for and the signature captured and verified for security purposes. In addition payment can be made instantly by swiping a smart cart or debit or credit card through a card reader such as that shown at 86. In addition the adapter can include, for example, a radio card and/or plug-in memory card.

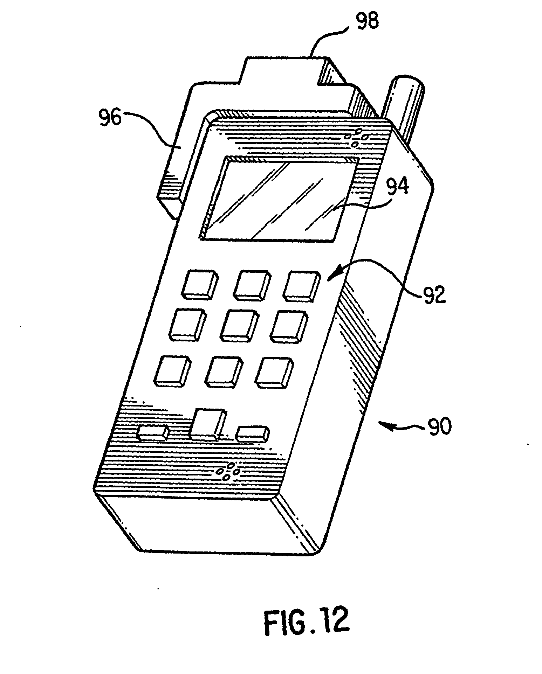

It will also be recognised that, although the above discussion has been directed to terminals such as personal digital assistants, other suitable terminals could be used. For example as mobile or cell phones become more versatile it can be envisaged that any adapter of the type discussed above can be incorporated. Referring, for example, to Fig. 12 a mobile phone 90 is shown including a keypad 92 and a display 94. Attached to the mobile phone 90 is an adapter 96 which in the embodiment shown includes a scanner portion 98. As a result the capabilities of the mobile phone are complemented and enhanced. This arrangement is particularly relevant to the new generation of mobile phones which incorporate computing/calculator type capabilities.

The arrangements of Figs. 6 to 10 further incorporate a scan switch 51, 61 preferably placed adjacent a long side of the terminal allowing easy operation by the user's thumb to activate the scanner.

It will be seen, therefore, that the invention generally provides a modular attachment introducing wand type scanning capabilities together with any other suitable capabilities to existing personal digital assistant products. In particular, wand type scanners can be incorporated in the modular attachment increasing the data gathering capabilities of the terminal accordingly. The modular attachment is self contained and will generally carry its own power source, scanning engines and decoders and so forth although, of course, the existing capabilities of the terminal including any processing or decoding capabilities together with the data input and display options can be incorporated.

In addition it will be recognised that the various features set out in relation to specific embodiments can be incorporated with the other embodiments as appropriate.

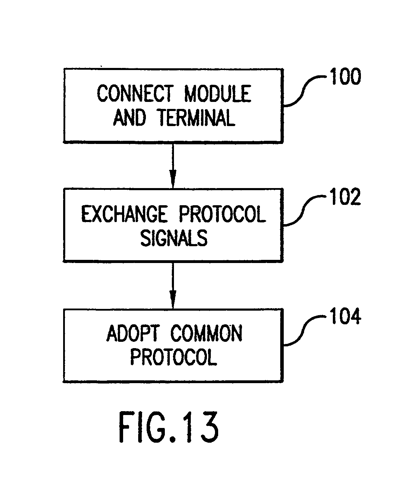

The various arrangements discussed above all require an interface between a terminal and a module of some type, for example a cradle or add-on adapter. In order to enhance interoperability, a "hand shaking" protocol is preferably introduced to ensure that the terminal and module can communicate correctly in their interface connection. A suitable system is shown in Fig. 13. At step 100 the terminal and module are connected at their interfaces. At step 102 the terminal and module exchange protocol signals indicative of the communications protocols which respective components obey. At step 104 a common protocol is adopted. In particular it is preferable to incorporate into the module compatibility with a range of protocols such that it can be connected to a variety of terminals even if some of those terminals only have one possible communication protocol. In that case, on receipt of the protocol signal from the terminal the module identifies the relevant communication protocol and selects that protocol for intercommunication with the terminal.

The description herein relates to portable arrangements which evidently require some form of portable power supply. A problem that has been identified with such power supplies, and in particular batteries is that, even in rechargeable batteries the battery capacity can reduce to zero after a period of time, for example one year - this problem can even extend to newly introduced batteries if they are not recently manufactured. In such cases even if a battery gauge on the terminal or adapter indicates that the battery is full, there may in practice be only a minimum charge on the battery.

To overcome this system an improved battery capacity measurement system is introduced. In particular the battery is tested and an indication of the actual maximum charge which can be held by the battery is given.

One way of doing this is to place the terminal, adapter or battery pack as appropriate onto a suitable stand or cradle and follow a software routine to measure the maximum battery charge. On the basis of this indication the battery can be discarded if necessary.

When the terminal or other component is removed from the cradle, two indications or displays can be provided, one indicating battery full and one indicating maximum charge available. A gauge, dial or LED system can show how much of the maximum potential capacity of the battery remains, for example showing a value in the range of 1 to 10 where 10 is maximum capacity. From this the hours of use left in the battery can be estimated. Of course software can be introduced to extrapolate from the basic information determined from the battery the approximate hourly life, or any other indication of charge such as energy stored. The operational parameters may vary between different battery types and a look-up table may be stored incorporating the relevant parametric information for a range of battery types. In that case, the battery information may be input manually to the terminal allowing the corresponding parametric information to be selected for determining the level of charge of the battery. Alternatively some form of automatic recognition circuit can be incorporated such that the battery type is automatically detected. The information relating to the battery can be in various forms and is preferably based on manufacturers data of discharge rates and so forth.

The manipulation of the raw data can be carried out in the terminal as appropriate. In one further implementation the terminal can be a hand-held computer and can be insertable into a host cradle for interconnection with a larger processor. This implementation is useful, for example where the terminal is used effectively for data collection and is inserted in the cradle for subsequent data downloading such that the processing capability is held at the cradle, reducing the weight and cost requirements for the terminal. In that case the terminal, including the batteries, can be inserted into a battery capacity measurement stand and the basic raw data can be fed to the terminal. When the terminal is then inserted into the host cradle the raw data is downloaded and processed, and the information relating to battery status and capacity is fed to the terminal for display, giving a more accurate estimate of the available battery life and when, for example, the next re-charge is required.

## Claims

1. A data collection module (50) arranged for mounting on a portable or hand-held computer (10) having a computer interface (18), the module comprising an interface for connection with the computer interface (18),
**characterized in that**
said module (50) further comprises a wand type data reading means (52), and
said wand type reading means (52) being arranged to pivot, slide, swing, or otherwise move to one of the two opposing front corners allowing left or right handed use.

2. A data collection module as claimed in claim 1 in which the portable or hand-held computer (10) comprises a portable digital assistant (PDA)

3. A combination of a data collection module as claimed in claim 1 and a portable or hand-held computer (10), said combination further comprising a processor (30) including a data decoder.

4. A module as claimed in claim 1 further comprising power supply means (42).

5. A module as claimed in claim 1 including an actuator (51) for actuating data collection, for example a multi-position actuator, each position determining a respective mode of operation.

6. A module as claimed in claim 1 further including at least one of the group of signature capture/verification capability, or magnetic strip reading capability.

7. A method of operation of a combination of a portable or hand-held computer (10) and data collection module as set forth in any of the preceding claims in which the computer and module cooperate as a data collection system.

8. A method as claimed in claim 7 in which the computer (10) recognises interface connection with the data collection module and switches operation to data collection mode.

9. A method as claimed in claim 7 in which the computer (10) recognises attachment from the data collection module and switches operation to PDA mode.

10. A method as claimed in claim 7 in which the computer (10) includes a display (12) and displays data collected by the data collection module.

11. A method as claimed in claim 7 in which the computer (10) includes data input means and the data reading means (52) is controlled by data input to the computer.

12. A method as claimed in claim 7 in which the computer (10) displays data collection module status data.

13. A method as claimed in claim 7 in which the computer (10) displays data collection module battery status.

14. A method as claimed in claim 7 in which the data collection module (50) includes indicator means (56, 58) and the computer sends indicator actuator signals to actuate the indicator means.

15. A method as claimed in claim 7 in which the computer (10) is battery powered, and in which an automated test of battery performance comprises measuring the rate of charge of battery voltage as the battery is discharged to a predetermined capacity level and deriving therefrom the expected discharge capacity.

16. A method as claimed in claim 7 in which the computer (10) and module (50) establish compatibility on interface connection.

17. A module as claimed in claim 7 in which interface connection is by optical interface, for example infra-red (IRDA) interface.

## Patentansprüche

1. Ein Datensammelmodul (50), das zur Anbringung auf einem tragbaren oder handgehaltenen Computer (10) angeordnet ist, der eine Computerschnittstelle (18) besitzt, wobei das Modul eine Schrittstelle zur Verbindung mit der Computerschnittstelle (18) aufweist,
**dadurch gekennzeichnet, dass**
das Modul (50) ferner ein Datenlesemittel (52) der Stiftbauart aufweist, und
das Lesemittel (52) der Stiftbauart angeordnet ist, um zu einer von zwei gegenüberliegenden Vorderecken zu schwenken, zu gleiten, zu schwingen oder sich auf eine andere Weise zu bewegen, was den Gebrauch durch Linksals auch Rechtshänder ermöglicht.

2. Datensammelmodul gemäß Anspruch 1, in dem der tragbare oder handgehaltene Computer (10) einen PDA (PDA = Portable Digital Assistant) aufweist.

3. Eine Kombination eines Datensammelmoduls gemäß Anspruch 1 und eines tragbaren oder handgehaltenen Computers (10), wobei die Kombination einen Prozessor (30) aufweist, der einen Datendecodierer umfasst.

4. Ein Modul gemäß Anspruch 1, das ferner ein Leistungsliefermittel (42) aufweist.

5. Ein Modul gemäß Anspruch 1, einschließlich eines Betätigers (51) zur Betätigung der Datensammlung, beispielsweise einen Mehrpositionsbetätiger, wobei jede Position einen entsprechenden Betriebsmodus bestimmt.

6. Ein Modul gemäß Anspruch 1, das ferner eine Signatur- bzw. Unterschriftenerfassungs-/-erkennungsfähigkeit und/oder eine Magnetstreifenlesefähigkeit aufweist.

7. Ein Betriebsverfahren einer Kombination eines tragbaren oder handgehaltenen Computers (10) und eines Datensammelmoduls gemäß einem der vorangehenden Ansprüche, in dem der Computer und das Modul als ein Datensammelsystem zusammenwirken.

8. Ein Verfahren gemäß Anspruch 7, in dem der Computer (10) die Schnittstellenverbindung mit dem Datensammelmodul erkennt und den Betrieb auf den Datensammelmodus umstellt.

9. Ein Verfahren gemäß Anspruch 7, in dem der Computer (10) die Anbringung von dem Datensammelmodul erkennt und den Betrieb auf den PDA-Modus umstellt.

10. Ein Verfahren gemäß Anspruch 7, in dem der Computer (10) eine Anzeige (12) umfasst und Daten anzeigt, die durch das Datensammelmodul gesammelt wurden.

11. Ein Verfahren gemäß Anspruch 7, in dem der Computer (10) Dateneingabemittel aufweist und das Datenlesemittel (52) durch die Dateneingabe in den Computer gesteuert wird.

12. Ein Verfahren gemäß Anspruch 7, in dem der Computer (10) die Datensammelmodulstatusdaten anzeigt.

13. Ein Verfahren gemäß Anspruch 7, in dem der Computer (10) den Datensammelmodulbatteriestatus anzeigt.

14. Ein Verfahren gemäß Anspruch 7, in dem das Datensammelmodul (50) Anzeigemittel (56, 58) aufweist und der Computer Anzeigebetätigersignale sendet, um die Anzeigemittel zu betätigen.

15. Ein Verfahren gemäß Anspruch 7, in dem der Computer (10) batteriebetrieben ist und in dem ein automatisierter Test der Batterieleistung das Messen der Ladungsrate der Batteriespannung, während die Batterie auf ein vorbestimmtes Kapazitätsniveau entladen wird, und das Ableiten der erwarteten Entladungskapazität daraus aufweist.

16. Ein Verfahren gemäß Anspruch 7, in dem der Computer (10) und das Modul (50) eine Kompatibilität auf der Schnittstellenverbindung aufbauen.

17. Ein Verfahren gemäß Anspruch 7, in dem die Schnittstellenverbindung durch eine optische Schnittstelle erfolgt, wie beispielsweise eine Infrarot-Schnittstelle (IRDA).

## Revendications

1. Module de collecte de données (50) agencé pour être monté sur un ordinateur portable ou tenu à la main (10) ayant une interface d'ordinateur (18), le module comprenant une interface pour connexion avec l'interface d'ordinateur (18),
**caractérisé en ce que :**
le module (50) comprend en outre un moyen de lecture de données de type stylo (52), et
le moyen de lecture de type stylo (52) est agencé pour pivoter, coulisser, basculer, ou se déplacer d'une autre façon vers l'un des deux coins avant opposés, permettant une utilisation par la main gauche ou par la main droite.

2. Module de collecte de données selon la revendication 1, dans lequel l'ordinateur portable ou tenu à la main (10) comprend un assistant numérique personnel (PDA).

3. Combinaison d'un module de collecte de données selon la revendication 1 et d'un ordinateur portable ou tenu à la main (10), la combinaison comprenant en outre un processeur (30) comprenant un décodeur de données.

4. Module selon la revendication 1, comprenant en outre un moyen d'alimentation (42).

5. Module selon la revendication 1, comprenant un actionneur (51) pour actionner la collecte de données, par exemple, un actionneur à positions multiples, chaque position déterminant un mode de fonctionnement respectif.

6. Module selon la revendication 1, comprenant en outre au moins une capacité de capture/vérification de signature ou une capacité de lecture de piste magnétique.

7. Procédé d'actionnement d'une combinaison d'un ordinateur portable ou tenu à la main (10) et d'un module de collecte de données selon l'une quelconque des revendications précédentes, dans lequel l'ordinateur et le module coopèrent en tant que système de collecte de données.

8. Procédé selon la revendication 7, dans lequel l'ordinateur (10) reconnaît une connexion d'interface avec le module de collecte de données et commute son fonctionnement sur un mode de collecte de données.

9. Procédé selon la revendication 7, dans lequel l'ordinateur (10) reconnaît le rattachement du module de collecte de données et commute son fonctionnement sur un mode PDA.

10. Procédé selon la revendication 7, dans lequel l'ordinateur (10) comprend un afficheur (12) et affiche des données collectées par le module de collecte de données.

11. Procédé selon la revendication 7, dans lequel l'ordinateur (10) comprend un moyen d'introduction de données et dans lequel le moyen de lecture de données (52) est commandé par l'introduction de données dans l'ordinateur.

12. Procédé selon la revendication 7, dans lequel l'ordinateur (10) affiche des données d'état du module de collecte de données.

13. Procédé selon la revendication 7, dans lequel l'ordinateur (10) affiche un état de batterie du module de collecte de données.

14. Procédé selon la revendication 7, dans lequel le module de collecte de données (50) comprend des moyens indicateurs (56, 58) et l'ordinateur envoie des signaux d'actionnement d'indicateur pour actionner les moyens indicateurs.

15. Procédé selon la revendication 7, dans lequel l'ordinateur (10) est alimenté par batterie, et dans lequel un test automatique de performance de batterie comprend la mesure du taux de charge de la tension de batterie lorsque la batterie est déchargée à un niveau de capacité prédéterminé et en déduit la capacité de décharge attendue.

16. Procédé selon la revendication 7, dans lequel l'ordinateur (10) et le module (50) établissent une compatibilité sur la connexion d'interface.

17. Procédé selon la revendication 7, dans lequel la connexion d'interface se fait par une interface optique, par exemple une interface à liaison infrarouge (IRDA).
